# EUROPÄISCHE PATENTSCHRIFT

(11) **EP 1 169 841 B1**
(45) Veröffentlichungstag und Bekanntmachung des Hinweises auf die Patenterteilung: **17.12.2008**
(21) Anmeldenummer: 00934856.6
(22) Anmeldetag: 03.04.2000
(51) Int. Cl.: H04M 1/27

(54) **ERSTELLEN EINES REFERENZMODELL-VERZEICHNISSES FÜR EIN SPRACHGESTEUERTES KOMMUNIKATIONSGERÄT**
GENERATION OF A REFERENCE-MODEL DIRECTORY FOR A VOICE-CONTROLLED COMMUNICATIONS DEVICE
ETABLISSEMENT D'UNE LISTE DE MODELES DE REFERENCE POUR UN APPAREIL DE COMMUNICATION A COMMANDE VOCALE

(30) Priorität: 22.04.1999 DE 19918382
(43) Veröffentlichungstag der Anmeldung: 09.01.2002
(73) Patentinhaber: Siemens Home and Office Communication GmbH & Co. KG, 81379 München (DE)
(72) Erfinder: KERN, Ralf, D-46399 Bocholt (DE); PFLAUM, Karl-Heinz, D-46397 Bocholt (DE)
(74) Vertreter: Maier, Daniel Oliver
(86) Internationale Anmeldenummer: PCT/DE2000/001019
(87) Internationale Veröffentlichungsnummer: WO 2000/065807

(56) Entgegenhaltungen:
- EP-A- 0 676 882
- WO-A-94/26054
- DE-A- 3 519 915
- US-A- 5 159 637
- MCDERMOTT E ET AL: "A TELEPHONE-BASED DIRECTORY ASSISTANCE SYSTEM ADAPTIVELY TRAINED USING MINIMUM CLASSIFICATION ERROR / GENERALIZED PROBABILISTIC DESCENT" IEEE INTERNATIONAL CONFERENCE ON ACOUSTICS, SPEECH, AND SIGNAL PROCESSING - PROCEEDINGS. (ICASSP),US,NEW YORK, IEEE, Bd. CONF. 21, 7. Mai 1996 (1996-05-07), Seiten 3346-3349, XP000681761 ISBN: 0-7803-3193-1

## Beschreibung

Die Erfindung betrifft ein Verfahren zum Erstellen eines Referenzmodell-Verzeichnisses für ein Spracherkennungssystem eines sprachgesteuerten Kommunikationsgerätes.

Gleichermaßen betrifft die Erfindung eine Vorrichtung zum Erstellen von Referenzmodellen für Spracherkennungssysteme, mit einem Konversionsmittel zur Durchführung einer Wort-Modell-Konversion von Befehlsworten in Textform in Referenzmodelle zur Verwendung in Spracherkennungssystemen.

Ebenso betrifft die Erfindung ein sprachgesteuertes Kommunikationsgerat, welches ein Spracherkennungssystem mit einem Speicher für ein Referenzmodell-Verzeichnis aufweist.

Unter einem Kommunikationsgerät wird hier ein Gerät verstanden, das fur den Gebrauch zur Übertragung oder Verarbeitung von Sprache und/oder Text bestimmt ist, wie z.B. ein Endgerät eines Telekommunikationsnetzes oder ein Textverarbeitungssystem. Hierbei ist der Gebrauch von der Steuerung des Kommunikationsgerates zu unterscheiden. Ein sprachgesteuertes Kommunikationsgerat ist folglich ein Kommunikationsgerät, welches Befehle in gesprochener Form entgegennimmt, verarbeitet und entsprechende Vorgänge ausführt. Die Entwicklung von Spracherkennungssystemen zur Verarbeitung und Erkennung gesprochener Sprache und, als Anwendung von Spracherkennungssystemen, von sprachgesteuerten Kommunikationsgeräten stellt derzeit einen bedeutenden Bereich der technischen Entwicklung dar.

Die in sprachgesteuerten Kommunikationsgeräten verwendeten, bekannten Spracherkennungssysteme lassen sich im wesentlichen in zwei Gruppen einteilen, nämlich zum einen sprecherunabhängige Systeme mit einem vorgegebenen, festen Wortschatz, und zum anderen sprecherabhängige, konfigurierbare Systeme. Bei ersteren, den sprecherunabhängigen Systemen ist nachteilig, dass sie nicht individuell konfigurierbar sind; wurde ein bestimmtes Wort z.B. als Befehl für eine bestimmte Steuerfunktion des Kommunikationsgeräts einmal festgelegt, so ist dieses Wort später nicht mehr veränderbar.

Individuell konfigurierbare Systeme bekannter Art dagegen haben den Nachteil, daß eine Bedienung durch verschiedene Benutzer - d.h. eine Spracherkennung für mehrere Sprecher - nicht oder nur unter schweren Einbußen hinsichtlich der Leistungsfähigkeit der Spracherkennung möglich ist. Ein weiterer Nachteil der konfigurierbaren Systeme ist der, dass sie trainiert werden müssen. Dies ist, da ja bei dem Training Sprachproben aufgezeichnet und verarbeitet werden, insbesondere im Hinblick auf die Anforderungen an die Umgebung, z.B. hinsichtlich Störgeräusche, oft sehr aufwendig und überdies zeitraubend.

Ein bekannter Ansatz, die Sprecherabhängigkeit konfigurierbarer Spracherkennungssysteme zu überwinden, verwendet eine sogenannte Nutzererkennung. Bei dieser Lösung muss sich der Benutzer mittels eines eigenen Passwortes gegenüber dem Spracherkennungssystem identifizieren, und erst aufgrund dieser Identifikation ist das System in der Lage, die von diesem Benutzer eingegebenen Worte zu erkennen. Eine andere bekannte Möglichkeit besteht darin, dass die einzelnen Worte von verschiedenen Benutzern trainiert werden, und das. Spracherkennungssystem ein gemeinsames Modell für das von den Benutzern gesprochene Wort generiert. Beide Lösungen können jedoch auf ein Training nicht verzichten und leiden daher unter den bereits genannten Nachteilen eines Trainings. Darüber hinaus bleibt die Anwendbarkeit auf die beteiligten Benutzer beschränkt.

Weitere bekannte Kommunikationsgeräte verwenden eine Mischform sprecherunabhängiger und -abhängiger Spracherkennung.

Hierbei wird mittels eines fest vorgegebenen Grundwortschatzes ein sprecherunabhängiges Vokabular zur Verfügung gestellt und mittels einer sprecherabhängigen Erkennung kann ein individuelles Zusatzvokabular konfiguriert werden. Allerdings ist auch bei dieser Lösung die Erkennung des Zusatzvokabulars sprecherabhängig, und ein Training ist nach wie vor erforderlich.

Aus der DE 35 19 915 A1 ist ein Verfahren zur Spracherkennung an Endgeräten von Fernmeldeanlagen bekannt, bei dem im Endgerät ein Sprachzwischenspeicher vorgesehen ist, der einem Spracherkenner angebotene Sprachsignale zusätzlich aufnimmt und an eine zentrale, in der Fernnmeldeanlage angeordneten Spracherkennungseinrichtung, die eine erhöhte Speicher- und Rechenkapazität aufweist, weitergegeben, wenn eine im Endgerät befindliche Spracherkennungseinrichtung eine Spracheingabe nicht eindeutig erkennen kann und einem vorgegebenen Referenzmuster zuordnen kann.

Es ist eine Aufgabe der Erfindung, einen Weg aufzuzeigen, um eine sprecherunabhängige Spracherkennung für ein Kommunikationsgerät individuell zu konfigurieren.

Die Aufgabe wird erfindungsgemäß von einem Verfahren der eingangs genannten Art mit den folgenden Schritten gelöst:
a) Eingabe zumindest eines Befehlswortes in Textform auf dem Kommunikationsgerät durch einen Benutzer,
b) Übertragen des/der Befehlsworte(s) über eine von dem Kommunikationsgerät initiierte Nachrichtenverbindung an eine Konverterstation,
c) Erstellen zumindest eines Referenzmodells seitens der Konverterstation anhand der Befehlsworte, wobei jeweils einem Befehlswort mittels einer Wort-Modell-Konversion ein Referenzmodell zugeordnet wird,
d) Senden des/der Referenzmodelle(s) über eine Nachrichtenverbindung an das Endgerät und
e) Speichern des/der empfangenen Referenzmodelle(s) in einem Referenzmodell-Verzeichnis seitens des Kommunikationsgerätes.

Durch diese Lösung ist eine individuelle und zugleich sprecherunabhängige Konfiguration des Wortschatzes eines Spracherkennungssystems ermöglicht. Dabei muss die für die Konversion benötigte, im allgemeinen beträchtliche Rechenleistung nicht auf seiten des Kommunikationsgerätes vorgesehen sein. Dies ermöglicht unter anderem auch das Einstellen von Ländervarianten oder regionalen Formen der Sprecher bzw. Benutzer. Ein weiterer Vorteil ist, dass Fortschritte bzw. eine Weiteter entwicklung auf dem Gebiet der Wort-Modell-Konversion dem Benutzer eines derartigen Kommunikationsgerätes auf einfache Weise, nämlich mittelbar über die abgesetzte Konverterstation, zugute kommen können.

Es ist dabei vorteilhaft, wenn in Schritt a) die Befehlsworte seitens des Kommunikationsgerätes in einem Befehlsverzeichnis gesammelt werden und in Schritt b) das Befehlsverzeichnis an die Konverterstation aufgrund eines spezifischen, vom Benutzer dem Kommunikationsgerät gegebenen Befehls übertragen wird. Dies ermöglicht nicht nur eine "gebündelte" Übertragung der Befehlsworte und verringert die Zahl der benötigten Verbindungen sowie insgesamt die Verbindungszeit; auch können die Befehlsworte in dem Befehlsverzeichnis zu einem späteren Zeitpunkt korrigiert, ergänzt od.dgl. werden.

Aus entsprechenden Gründen ist es günstig, wenn seitens der Konverterstation die in Schritt c) erstellten Referenzmodelle zu einem Referenzmodell-Verzeichnis zusammengestellt werden und in Schritt d) das Verzeichnis an das Endgerät gesendet wird.

In einer besonders zweckmäßigen Ausführungsform der Erfindung ist das Kommunikationsgerät ein Endgerät eines Telekommunikationsnetzes, und Schritte b) und d) erfolgen über Verbindungen des Telekommunikationsnetzes.

Gleichermaßen eignet sich zur Lösung der obigen Aufgabe erfindungsgemäß eine Vorrichtung zum Erstellen von Referenzmodellen für Spracherkennungssysteme der eingangs genannten Art mit einer mit dem Konversionsmittel verbundenen Schnittstelle, über welche Befehlsworte empfangbar und dem Konversionsmittel zuleitbar sind und über welche von dem Konversionsmittel erstellte Referenzmodelle aussendbar sind.

Eine bevorzugte Ausführungsform der Vorrichtung hat einen dem Konversionsmittel vorgeschalteten Wortschatzspeicher zur Zwischenspeicherung der empfangenen Befehlsworte. Dies vereinfacht die Verarbeitung der eintreffenden Befehlsworte; auch können Ergänzungen bzw. Korrekturen bestehender Wortschatzverzeichnisse bearbeitet werden.

Aus entsprechenden Gründen ist es günstig, wenn die Vorrichtung einen dem Konversionmittel nachgeschalteten Referenzmodellspeicher zur Zwischenspeicherung der erstellten Refernzmodelle hat.

In einer besonders zweckmäßigen Ausführungsform der Vorrichtung ist ihre Schnittstelle Teil eines Telekommunikationsnetzes.

Die oben gestellte Aufgabe wird des weiteren ausgehend von einem Kommunikationsgerät der eingangs genannten Art durch ein Kommunikationsgerät gelöst
mit einem Eingabemittel zur Eingabe von Befehlsworten in Textform,
und mit einer, mit dem Eingabemittel und mit dem Speicher des Referenzmodell-Verzeichnisses verbundenen Sendeempfangseinrichtung, mittels welcher Nachrichtenverbindungen zu einer Konverterstation herstellbar sind, über welche Befehlsworte übertragbar sowie Referenzmodelle empfangbar sind.

Die Vorteile des erfindungsgemäßen Kommunikationsgeräts und seiner bevorzugten Ausgestaltungsformen (Ansprüche 10 und 11) wurden weiter oben bereits dargestellt.

Die Erfindung samt weiterer Vorzüge wird im folgenden anhand eines nicht einschränkenden Ausführungsbeispiels, nämlich eines sprachgesteuerten Endgerätes eines Telekommunikationsnetzes, unter Zuhilfenahme der beigefügten Figuren näher erläutert. Die Figuren zeigen in Blockdiagrammen:
- Fig. 1: das Spracherkennungssystem des Ausführungsbeispiels und
- Fig. 2: die Erzeugung von Referenzmodellen für das Spracher- kennungssystem der Fig. 1.

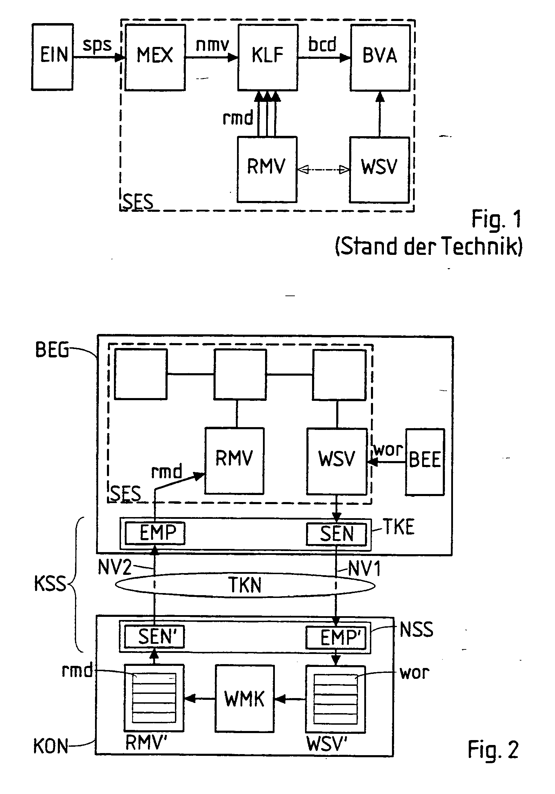

Vorab seien anhand der Fig. 1 die wesentlichen Komponenten eines Spracherkennungssystems SES erläutert, soweit dies zum besseren Verständnis der Erfindung erforderlich ist. Der Ablauf der in Fig. 1 dargestellten Spracherkennung ist dem Fachmann wohlbekannt; nähere Informationen gehen beispielsweise aus dem Artikel von Steve Young, 'A Review of Large-Vocabulary Continuous-Speech Recognition', IEEE Signal Processing Magazine, Sept. 1996, S.45-57 hervor, der über eine grundsätzliche Darstellung des Ablaufs der Spracherkennung hinaus insbesondere auf die kontinuierliche Spracherkennung näher eingeht.

Zweck des Spracherkennungssystems SES ist, einen akustisch als Sprache eingegebenen Befehl des Benutzers entgegenzunehmen und daraus den auszuführenden Befehl zu bestimmen. Der gesprochene Befehl wird über eine akustische Eingabe EIN, z.B. ein Mikrophon, in ein elektrisches Sprachsignal sps in analoger oder digitalisierter Form umgesetzt. Das Sprachsignal wird einer merkmalsextrahierenden Vorverarbeitung MEX zugeführt. Erster Schritt der Vorverarbeitung MEX ist gewöhnlicherweise eine Signalanalyse des Sprachsignals sps, z.B. in Form einer Fourier-Transformation und nachfolgende Zerlegung in Frequenzkanäle. Aus den so gewonnenen Signalparameter werden die zur Spracherkennung erforderlichen Merkmale extrahiert; dieser Schritt dient zugleich einer - im allgemeinen beträchtlichen - Datenreduktion. Die extrahierten Merkmal le stellen insgesamt einen Merkmalsvektor dar, der die Äußerung des Benutzers repräsentiert. Zweckmäßigerweise wird der Merkmalsvektor noch einer Normalisierung unterworfen, um die möglichen Variationen der Sprache, z.B. hinsichtlich Betonung, Lautstärke, Geschwindigkeit etc., auszugleichen. Ergebnis der Vorverarbeitung MEX ist ein normierter Merkmalsvektor nmv, der als Testmuster der folgenden Klassifikation KLF unterworfen wird.

Die Klassifikation KLF bestimmt ausgehend von einem Verzeichnis RMV von Referenzmodellen die Übereinstimmung - innerhalb des jeweils vorgegebenen Abweichungsbereiches - mit dem gegebenen Testmuster nmv. Hierbei kann, je nach den gegebenen Anforderungen, z.B. die Übereinstimmung des Testmusters mit einem einzelnen Referenzmodell rmd (Einzelwort-Erkennung), die Übereinstimmung eines oder mehrerer Teile des Testmusters mit jeweils einem Referenzmodell rmd (Schlüsselwort-Erkennung) oder die Übereinstimmung mit einer Verkettung von-Referenzmodellen (Satzerkennung) ermittelt werden. Ein Referenzmodell kann beispielsweise als Referenzvektor nach Art eines normierten Merkmalsvektors oder als sogenannte Hidden-Markov-Modell (HMM) realisiert sein. Jedes Referenzmodell des verzeichnisses RMV entspricht einem Wort ("Befehlswort") eines Wortschatzes, welcher in einem Wortschatzverzeichniss WSV abgelegt ist. Die Befehlswörter sind beispielsweise in Schriftform festgelegt. Ihnen sind auch semantische Informationen zugeordnet, aus denen die "Bedeutung" der Befehlswörter hervorgeht; Art und Umfang der Informationen hängen freilich von der nachgeordneten Befehlsverarbeitung ab.

Das Ergebnis der Klassifikation KLF ist ein Befehlscode bcd, z.B. in Form eines oder mehrerer Indizes, die jeweils das erkannte Referenzmodell bzw. das ihm zugeordnete Befehlswort bezeichnen. Der Befehlscode bcd wird an eine Befehlsverarbeitung BVA weitergeleitet, die den Befehlscode interpretiert und, aufgrund der vorgegebenen "Bedeutung" der Befehlswörter und gegebenenfalls unter Zuhilfenahme von im Wortschatz WSV abgelegten semantischen Informationen, die entsprechenden Vorgänge ausführt.

Im Falle der Anwendung der Spracherkennung für ein Telekommunikationsendgerät wie in dem hier betrachteten Beispiel kann die "Bedeutung" eines Befehlswortes beispielsweise einen Befehl darstellen, wie z.B. eine Anforderung einer Herstellung einer Telekommunikationsverbindung, ein Signal repräsentieren, wie z.B. eine Ziffer bei einem Wählvorgang, oder als "Kürzel" eine Kombination von anderen Worten repräsentieren. Beispielsweise könnte für ein sprachgesteuertes Telefongerät eine Äußerung wie "Verbindung zu Max Meier herstellen." bei entsprechender Programmierung in drei Befehlswörter aufgeschlüsselt werden, nämlich "Verbindung" als Anweisung, eine Telefonverbindung zu initiieren, "Max Meier" als programmiertes Kürzel für eine Rufnummer, nämlich jene des Herrn Max Meier, und "herstellen" als Stopzeichen, soweit das Ende der Äußerung nicht ohnedies erkannt wird.

Das soeben gegebene Beispiel enthält ein Kürzel, welches gunstigerweise sowohl hinsichtlich seines Wortlauts als auch seiner Bedeutung seitens des Benutzers programmierbar ist. Dies setzt voraus, dass seitens des Benutzers der Wortlaut eines Befehls definiert werden kann und in der Folge dem Spracherkennungssystem SES als Referenzmodell zur Verfügung gestellt wird. Hierbei ist für die Erfindung von untergeordneter Bedeutung, ob beispielsweise einem bereits vorhandenen Befehl (bei gleichbleibender Bedeutung) ein neuer Wortlaut, anstelle von oder zusätzlich zu dem/den bereits bestehenden Wortlaut(en), zugeordnet oder ein neuer Befehl mit voreingestellter oder programmierbarer Bedeutung eingerichtet wird. Gemäß der Erfindung wird der Wortlaut eines Befehlswortes in sprecherunbhangiger Form definiert, nämlich in Textform, z.B. in Form eines geschriebenen Wortes in üblicher Schreibweise - gegebenenfalls mit zusätzlichen Transkriptionen - oder in Lautschrift.

Bezugnehmend auf Fig. 2 werden die vom Benutzer gewünschten Befehle als Text in das Endgerät BEG eingegeben. Dies erfolgt mittels einer Befehlsworteingabe BEE, z.B. einer Tastatur oder einer Buchstabiererkennung. Die so eingegebenen Befehlsworte wor werden in einem Wortschatz-Verzeichnis WSV des Endgerätes BEG gesammelt. Die Befehlsworte wor werden in Referenzmodelle rmd konvertiert, in dem Referenzmodell-Verzeichnis RMV des Endgeräts BEG gespeichert und werden auf diese Weise dem Spracherkennungssystem SES zur Verfügung gestellt.

Die Wort-Modell-Konversion WMK der in Textform gegebenen Befehlsworte in diesen entsprechende Referenzmodelle erfolgt nach einem bekannten Verfahren der Graphem-zu-Phonem-Konversion, vgl. hierzu etwa den bereits erwähnten Artikel des IEEE Signal Processing Magazine. Bei der Konversion werden auch kontextabhängige Veränderungen der Phoneme, wie sie beim Sprechen auftreten, berücksichtigt, beispielsweise dadurch dass sogenannte Diphone und Triphone, welche sich aus der Kombination je zwei bzw. drei aufeinanderfolgender Phoneme ergeben, bei der Erstellung der Referenzmodelle zugrunde gelegt werden.

Erfindungsgemäß erfolgt die Wort-Modell-Konversion WMK nicht in dem Endgerät BEG, sondern in einer abgesetzten Konverterstation KON. Dies hat den Vorteil, dass die für die Konversion benötigte, im allgemeinen beträchtliche Rechenleistung nicht auf seiten des Endgerätes BEG vorgesehen sein muss. Die Befehlsworte wor bzw. das Wortschatzverzeichnis WSV werden über eine Konverterschnittstelle KSS an die Konverterstation gesendet; über dieselbe oder eine andere Konverterschnittstelle KSS werden die bei der Konversion erstellten Referenzmodelle rmd bzw. ein aus diesen zusammengestelltes Verzeichnis RMV wieder an das Endgerät BEG zurückgeliefert. Insbesondere kann die Konverterstation eine zentrale Rechenstation sein, welche von mehreren Benutzern nutzbar ist, z.B. eine Basisstation eines Telekommunikationsnetzes oder ein Server eines Computernetzes. Auf diese Weise können Systemressourcen ökonomisch eingesetzt werden. Zudem kann eine Weiterentwicklung der Konversionsverfahren den verschiedenen Benutzern bzw. deren Endgeräten unmittelbar zur Verfügung gestellt werden.

In dem hier betrachteten Ausführungsbeispiel ist die Konverterstation KON ein zentraler Servicerechner, welcher von dem Betreiber des Telekommunikationsnetzes TKN, worin das Endgerät BEG angeschlossen bzw. subskribiert ist, für die Durchführung von Wort-Modell-Konversionen eingerichtet ist. Die Telekommunikationsendeinrichtung TKE des Endgerätes BEG kann in diesem Fall zur Herstellung der Konverterschnittstelle KSS herangezogen werden. Es ergibt sich als Vorteil, dass das Endgerät BEG ohnedies die erforderlichen Mittel zum Nachrichtenaustausch über eine Netzverbindung NV1,NV2 aufweist, so dass auf seiten des Endgeräts BEG eine entsprechende Sendeempfangseinrichtung zur Übertragung der Befehlsworte bzw. zum Empfang der Referenzmodelle nicht zusätzlich vorgesehen sein muss. Auf seiten der Konverterstation KON ist die Konverterschnittsstelle KON durch die Anbindung in das Telekommunikationsnetz TKN über eine netzinterne Schnittstelle NSS nach bekannter Art realisiert.

In einer Variante können die Schnittstellenelemente des Kommunikationsgerätes BEG und der Konverterstation KON selbstverständlich auch getrennt im Hinblick auf das Übertragen der Befehlsworte wor einerseits und das Senden der Referenzmodelle rmd andererseits realisiert sein. In diesem Falle ist seitens des Kommunikationsgerätes BEG eine Sendeschnittstelle SEN zum Senden der Befehlsworte wor und eine Empfangsschnittstelle EMP zum Empfangen der Referenzmodelle rmd vorgesehen; diese bilden zusammen eine Sendeempfangsschnittstelle TKE als jener Teil der Konverterschnittstelle KSS, welcher dem Kommunikationsgerät zukommt. Dementsprechend ist seitens der Konverterstation KON für ihren Teil NSS der Konverterschnittstelle eine Empfangsschnittstelle EMP' und eine Sendeschnittstelle SEN' zum Empfangen der Befehlsworte wor bzw. Senden der erstellten Referenzmodelle rmd vorgesehen.

Nach der Eingabe der Befehlsworte wor durch den Benutzer, der die Nutzung des von dem Servicerechner angebotenen Dienst der Wort-Modell-Konversion subskribiert haben muss, werden die Befehlsworte über eine Verbindung NV1 des Telekommunikationsnetzes an die Konverterstation KON übertragen. Diese erstellt anhand der so erhaltenen Befehlsworte wor Referenzmodelle rmd und sendet diese sodann an das Endgerät BEG zurück. Das Senden der Referenzmodelle rmd erfolgt über eine Netzverbindung NV2, die günstigerweise unabhängig von der ersten Verbindung NV1 initiiert wird. Hierbei kann der Aufbau der Verbindung NV2 zu einem späteren Zeitpunkt von dem Endgerät initiiert werden, beispielsweise mit einer einleitenden Abfrage nach dem Ergebnis der Wort-Modell-Konversion an die Konverterstation KON. Günstigerweise wird die Verbindung NV2 von der Konverterstation KON her initiiert, beispielsweise sobald die Konversion abgeschlossen ist oder wenn aufgrund eines Updates der Konversionsverfahren die Referenzmodelle rmd bzw. das Referenzmodell-Verzeichnis RMV des Benutzers neu bestimmt wurde.

Zur Übertragung der Befehlsworte wor bzw. zum Zurücksenden der Referenzmodelle rmd kann beispielsweise ein Kurznachrichtendienst, wie z.B. das SMS ('Short Message Service') des GSM-Netzes verwendet werden. Ebenso können die Befehlsworte bzw. Referenzmodelle in Form einer Anlage einer e-Mail-Nachricht ausgetauscht werden. Die Form der Nachricht(en) hängt natürlich im Einzelfall von dem verwendeten Endgerät und dem Telekommunikationsnetz ab.

Von dem Endgerät kann anstelle der neu konfigurierten Befehlsworte auch der gesamte Wortschatz WSV oder ein bestimmter Teil davon - einschließlich der neuen Befehlsworte - als zu bearbeitender Wortschatz WSV' an die Konverterstation KON übertragen werden. Das Ergebnis der Konversion, welches von der Konverterstation KON zurückgeliefert wird, ist ein Referenzmodell-Verzeichnis RMV', welches in entsprechender Weise das Verzeichnis RMV des Endgerätes BEG ergänzt bzw. gänzlich oder teilweise ersetzt. Durch diese Vorgangsweise können bei der Wort-Modell-Konversion WMK auch die bereits bestehenden Befehlsworte berücksichtigt werden, weshalb eine vergleichsweise bessere Worterkennung im Hinblick auf die Abgrenzung der einzelnen Befehlsworte bzw. der zugeordneten Referenzmodelle gegeneinander erreichbar ist.

Die von dem Benutzer eingegebenen Befehlsworte können z.B. Namen von möglichen Gesprächspartnern sein, die mit der jeweils zugehörenden Rufnummer verknüpft sind. Die Erfindung ermöglicht so ein "sprachgesteuertes Telefonbuch", welches sprecherunabhängig abgerufen werden kann, z.B. im Falle einer betriebseigenen Telefon-Hausanlage, in der die Spracherkennung zentral von der Hausanlage durchgeführt wird, von allen Nutzern der Hausanlage.

In einer möglichen Variante kann die Konverterstation KON z.B. ein Computer ausreichender Rechenleistung sein, welcher über eine leitungsgebundene oder schnurlose Schnittstelle, z.B. eine Infrarot-Schnittstelle, die Befehlsworte und die dafür erstellten Referenzmodelle mit dem Kommunikationsgerät BEG austauscht.

## Patentansprüche

1. Verfahren zum Erstellen eines Referenzmodell-Verzeichnisses (RMV) für ein Spracherkennungssystem (SES) eines sprachgesteuerten Kommunikationsgerätes,
**gekennzeichnet durch**
die folgenden Schritte:
a) Eingabe zumindest eines Befehlswortes (wor) in Textform auf dem Kommunikationsgerät (BEG) **durch** einen Benutzer,
b) Übertragen des/der Befehlswortes über eine von dem Kommunikationsgerät initiierte Nachrichtenverbindung (NV1) an eine Konverterstation (KON),
c) Erstellen zumindest eines Referenzmodells seitens der Konverterstation (KON) anhand der Befehlsworte, wobei jeweils einem Befehlswort (wor) mittels einer Wort-Modell-Konversion (WMK) ein Referenzmodell (rmd) zugeordnet wird,
d) Senden des/der Referenzmodelles über eine Nachrichtenverbindung (NV2) an das Endgerät und
e) Speichern des/der empfangenen Referenzmodelles in einem Referenzmodell-Verzeichnis (RMV) seitens des Kommunikationsgerätes (BEG).

2. Verfahren nach Anspruch 1,
**dadurch gekennzeichnet, dass** in Schritt a) die Befehlsworte (wor) seitens des Kommunikationsgerätes in einem Befehlsverzeichnis (WSV) gesammelt werden und
dass in Schritt b) das Befehlsverzeichnis (WSV) an die Konverterstation (KON) aufgrund eines spezifischen, vom Benutzer dem Kommunikationsgerät gegebenen Befehls übertragen wird.

3. Verfahren nach Anspruch 1 oder 2,
**dadurch gekennzeichnet, dass** seitens der Konverterstation die in Schritt c) erstellten Referenzmodelle (rmd) zu einem Referenzmodell-Verzeichnis (RMV) zusammengestellt werden und in Schritt d) das Verzeichnis an das Endgerät gesendet wird.

4. Verfahren nach einem der Ansprüche 1 bis 3,
**dadurch gekennzeichnet, dass** das Kommunikationsgerät (BEG) ein Endgerät eines Telekommunikationsnetzes (TKN) ist und Schritte b) und d) über Verbindungen (NV1, NV2) des Telekommunikationsnetzes erfolgen.

5. Vorrichtung (KON) zum Erstellen von Referenzmodellen für Spracherkennungssysteme, mit einem Konversionsmittel (WMK) zur Durchführung einer Wort-Modell-Konversion von Befehlsworten (wor) in Textform in Referenzmodelle (rmd) zur Verwendung in Spracherkennungssystemen,
**gekennzeichnet durch**
eine mit dem Konversionsmittel verbundene Schnittstelle (NSS), über welche Befehlsworte empfangbar und dem Konversionsmittel zuleitbar sind und über welche von dem Konversionsmittel erstellte Referenzmodelle aussendbar sind.

6. Vorrichtung nach Anspruch 5,
**gekennzeichnet durch** einen dem Konversionsmittel vorgeschalteten Wortschatzspeicher (WSV') zur Zwischenspeicherung der empfangenen Befehlsworte (wor).

7. Vorrichtung nach Anspruch 5 oder 6,
**gekennzeichnet durch** einen dem Konversionmittel nachgeschalteten Referenzmodellspeicher (RMV') zur Zwischenspeicherung der erstellten Refernzmodelle (rmd).

8. Vorrichtung nach einem der Ansprüche 5 bis 7,
**dadurch gekennzeichnet, dass** die Schnittstelle (NSS) Teil eines Telekommunikationsnetzes (TKN) ist.

9. Sprachgesteuertes Kommunikationsgerät (BEG), welches ein Spracherkennungssystem (SES) mit einem Speicher für ein Referenzmodell-Verzeichnis (RMV) aufweist,
**gekennzeichnet durch**
ein Eingabemittel (BEE) zur Eingabe von Befehlsworten (wor) in Textform,
eine mit dem Eingabemittel (BEE) und mit dem Speicher des Referenzmodell-Verzeichnisses (RMV) verbundene Sendeempfangseinrichtung (TKE), mittels welcher Nachrichtenverbindungen (NV1, NV2) zu einer Konverterstation (KON) herstellbar sind, über welche Befehlsworte (wor) übertragbar sowie Referenzmodelle (rmd) empfangbar sind.

10. Kommunikationsgerät nach Anspruch 9,
**gekennzeichnet durch** ein zwischen dem Eingabemittel (BEE) und dem Speicher des Referenzmodell-Verzeichnisses (RMV) geschalteten Befehlsverzeichnis (WSV) zum Speichern der Befehlsworte (wor).

11. Kommunikationsgerät nach Anspruch 9 oder 10,
**dadurch gekennzeichnet, dass** die Sendeempfangseinrichtung (TKE) als Endeinrichtung eines Telekommunikationsnetzes (TKN) realisiert ist.

## Claims

1. Method for creating a reference model list (RMV) for a voice recognition system (SES) in a voice-controlled communication appliance,
**characterized by**
the following steps:
a) at least one command word (wor) is entered in text form on the communication appliance (BEG) by a user,
b) the command word(s) is/are transmitted to a converter station (KON) via a communication link (NV1) initiated by the communication appliance,
c) at least one reference model is created by the converter station (KON) using the command words, with a respective command word (wor) having a reference model (rmd) allocated to it by means of word/model conversion (WMK),
d) the reference model(s) is/are sent to the terminal via a communication link (NV2), and
e) the reference model(s) received is/are stored in a reference model list (RMV) by the communication appliance (BEG).

2. Method according to Claim 1,
**characterized in that,** in step a), the command words (wor) are collected in a command list (WSV) by the communication appliance, and
**in that**, in step b), the command list (WSV) is transmitted to the converter station (KON) on the basis of a specific command given to the communication appliance by the user.

3. Method according to Claim 1 or 2,
**characterized in that** the converter station compiles the reference models (rmd) created in step c) to form a reference model list (RMV),
and the list is sent to the terminal in step d).

4. Method according to one of Claims 1 to 3,
**characterized in that** the communication appliance (BEG) is a terminal in a telecommunication network (TKN), and steps b) and d) are performed via connections (NV1, NV2) in the telecommunication network.

5. Apparatus (KON) for creating reference models for voice recognition systems, having a conversion means (WMK) for performing word/model conversion on command words (wor) in text form to produce reference models (rmd) for use in voice recognition systems,
**characterized by**
an interface (NSS) which is connected to the conversion means and can be used to receive command words and to pass them to the conversion means, and which can be used to transmit reference models created by the conversion means.

6. Apparatus according to Claim 5,
**characterized by** a vocabulary memory (WSV'), connected upstream of the conversion means, for buffer-storing the command words (wor) received.

7. Apparatus according to Claim 5 or 6,
**characterized by** a reference model memory (RMV'), connected downstream of the conversion means, for buffer-storing the reference models (rmd) created.

8. Apparatus according to one of Claims 5 to 7, **characterized in that** the interface (NSS) is part of a telecommunication network (TKN).

9. Voice-controlled communication appliance (BEG) which has a voice recognition system (SES) having a memory for a reference model list (RMV),
**characterized by**
an input means (BEE) for entering command words (wor) in text form, a transmission/reception device (TKE) which is connected to the input means (BEE) and to the memory of the reference model list (RMV) and can be used to set up communication links (NV1, NV2) to a converter station (KON) which can be used to transmit command words (wor) and to receive reference models (rmd).

10. Communication appliance according to Claim 9, **characterized by** a command list (WSV), connected between the input means (BEE) and the memory of the reference model list (RMV), for storing the command words (wor).

11. Communication appliance according to Claim 9 or 10, **characterized in that** the transmission/reception device (TKE) is in the form of a terminal device in a telecommunication network (TKN).Description

## Revendications

1. Procédé pour établir un répertoire de modèles de référence (RMV) pour un système de reconnaissance vocale (SES) d'un appareil de communication à commande vocale, **caractérisé par** les étapes suivantes:
a) saisie d'au moins un mot de commande (wor) sous forme textuelle sur l'appareil de communication (BEG) par un utilisateur,
b) transmission du / des mots de commande à une station de conversion (KON) via une liaison de messages (NV1) initialisée par l'appareil de communication,
c) établissement d'au moins un modèle de référence du côté de la station de conversion (KON) à l'aide des mots de commande, un modèle de référence (rmd) étant affecté respectivement à un mot de commande (wor) au moyen d'une conversion mot-modèle (WMK),
d) envoi du / des modèles de référence au terminal via une liaison de messages (NV2) et
e) stockage du / des modèles de référence reçus dans un répertoire de modèles de référence (RMV) du côté de l'appareil de communication (BEG).

2. Procédé selon la revendication 1, **caractérisé en ce que,** à l'étape a), les mots de commande (wor) sont collectés dans un répertoire de commandes (WSV) du côté de l'appareil de communication et **en ce que**, à l'étape b), le répertoire de commandes (WSV) est transmis à la station de conversion (KON) sur la base d'une commande spécifique donnée par l'utilisateur de l'appareil de communication.

3. Procédé selon la revendication 1 ou 2, **caractérisé en ce que,** du côté de la station de conversion, les modèles de référence (rmd) établis à l'étape c) sont regroupés en un répertoire de modèles de référence (RMV) et, à l'étape d), le répertoire est envoyé au terminal.

4. Procédé selon l'une des revendications 1 à 3, **caractérisé en ce que** l'appareil de communication (BEG) est un terminal d'un réseau de télécommunications (TKN) et les étapes b) et d) s'effectuent par l'intermédiaire de liaisons (NV1, NV2) du réseau de télécommunications.

5. Dispositif (KON) pour établir des modèles de référence pour des systèmes de reconnaissance vocale, comportant un moyen de conversion (WMK) pour effectuer une conversion mot / modèle de mots de commande (wor) sous forme textuelle dans des modèles de référence (rmd) pour utilisation dans des systèmes de reconnaissance vocale, **caractérisé par** une interface (NSS) reliée au moyen de conversion, via laquelle des mots de commande peuvent être reçus et amenés au moyen de conversion et via laquelle des modèles de référence établis par le moyen de conversion peuvent être émis.

6. Dispositif selon la revendication 5, **caractérisé par** une mémoire de vocabulaire (WSV') située en amont du moyen de conversion pour le stockage intermédiaire des mots de commande reçus (wor).

7. Dispositif selon le revendication 5 ou 6, **caractérisé par** une mémoire de modèles de référence (RMV') située en aval du moyen de conversion pour le stockage intermédiaire des modèles de référence établis (rmd).

8. Dispositif selon l'une des revendications 5 à 7, **caractérisé en ce que** l'interface (NSS) fait partie d'un réseau de télécommunications (TKN).

9. Appareil de communication à commande vocale (BEG), lequel comporte un système de reconnaissance vocale (SES) avec une mémoire pour un répertoire de modèles de référence (RMV), **caractérisé par** un moyen de saisie (BEE) pour la saisie de mots de commande (wor) sous forme textuelle, un dispositif émetteur récepteur (TKE) relié au moyen de saisie (BEE) et à la mémoire du répertoire de modèles de référence (RMV) et au moyen duquel peuvent être établies des liaisons de messages (NV1, NV2) vers une station de conversion (KON) via laquelle des mots de commande (wor) peuvent être transmis et des modèles de référence (rmd) peuvent être reçus.

10. Appareil de communication selon la revendication 9, **caractérisé par** un répertoire de commandes (WSV) située entre le moyen de saisie (BEE) et la mémoire du répertoire de modèles de référence (RMV) pour stocker les mots de commande (wor).

11. Appareil de communication selon la revendication 9 ou 10, **caractérisé en ce que** le dispositif émetteur récepteur (TKE) est réalisé sous la forme d'un terminal d'un réseau de télécommunications (TKN).
